# NEUE EUROPÄISCHE PATENTSCHRIFT

(11) **EP 0 531 373 B2**
(45) Veröffentlichungstag und Bekanntmachung des Hinweises auf die Entscheidung über den Einspruch: **02.08.2000**
(45) Hinweis auf die Patenterteilung: 11.05.1994
(21) Anmeldenummer: 91909974.7
(22) Anmeldetag: 27.05.1991
(51) Int. Cl.: G01N 21/51

(54) **STREULICHTPHOTOMETER, INSBESONDERE ZUR KINETISCHEN GESAMTEIWEISSBESTIMMUNG**
DISPERSION PHOTOMETER, IN PARTICULAR FOR THE KINETIC DETERMINATION OF TOTAL PROTEINS
PHOTOMETRE A ECRAN DIFFUSANT, EN PARTICULIER POUR LA DETERMINATION CINETIQUE DE PROTEINES TOTALES

(30) Priorität: 30.05.1990 DE 4017465
(43) Veröffentlichungstag der Anmeldung: 17.03.1993
(73) Patentinhaber: DOSATEC GmbH, D-81825 München (DE)
(72) Erfinder: PLAGGE, Heinrich, D-3402 Dransfeld (DE); KRAUSE, Hans-Joachim, D-3400 Göttingen (DE); OBERDORFER, Dietmar, D-3400 Göttingen (DE); PLÜQUETT, Ulrich, D-3400 Göttingen (DE)
(74) Vertreter: Bauer, Wulf, Dr.
(86) Internationale Anmeldenummer: DE9100451
(87) Internationale Veröffentlichungsnummer: WO9119184

(56) Entgegenhaltungen:
- AU-D- 493 266
- US-A- 4 136 953
- US-A- 4 157 871
- US-A- 4 250 394
- US-A- 4 408 880
- GROVES, M.J., Chemical Analysis, Vol. 73, S. 43-71
- STERNBERG, J.C., Clin. Chem. 23/8, S. 1456-1464(1977)

## Beschreibung

Die Erfindung bezieht sich auf ein Streulichtphotometer.

Bei dem Streulichtphotometer nach der US-A 4 250 394 wird das von einer Quarz-Halogenlampe kommende Licht mittels einer Optik zu einem parallelen Strahlengang geformt, dieses parallele Licht tritt in die Küvette ein. Zwischen Optik und Küvette ist ein Filter angeordnet, das eine Transmission zwischen 300 und 400 nm bewirkt.

Aus der US-A 4 408 880 ist ein Streulichtphotometer bekannt, bei dem als Lichtquelle ein Laser eingesetzt wird. Sein Ausgangslicht tritt unmittelbar in eine Küvette ein, das Streulicht wird mittels einer Linse gesammelt und fällt auf einen photoelektrischen Empfänger.

Aus der US-A-4 157 871 ist ein Streulichtphotometer bekannt, bei dem als Lichtquelle eine Wolfram-Lampe mit Filter verwendet wird. Die Auswertung erfolgt über einen Lock-In Verstärker, wodurch zwar eine gute Meßempfindlichkeit erreicht wird, die Vorrichtung aber auch sehr verteuert wird. Aus dieser Vorveröffentlichung ist es bekannt, Störimpulse zu clippen. Ein ähnliches Streulichtphotometer ist auch aus dem Artikel von Sternberg, J. C., Clin. Chem. 23/8, S. 1456-1464 (1977) bekannt.

In dem Artikel von Groves, M. J., Chemical Anlaysis, Vol. 73, S. 43-71 sind verschiedene Streulichtphotometer (Nephelometer) beschrieben, bei denen als Lichtquelle ein Laser eingesetzt wird. Auf Streulichtphotometer, die mit Weißlicht arbeiten, wird nur kurz und in drei Sätzen eingegangen und ausgeführt, daß derartige Geräte eine geringere Empfindlichkeit als Lasergeräte hätten. In einer Figur ist schematisch der Aufbau eines mit Weißlicht arbeitenden Gerätes der Firma Climent gezeigt. Es ist nicht ersichtlich, wie die elektrische Auswertung erfolgt. Eine Rührvorrichtung ist nicht vorgesehen, es wird nicht schräg in Vorwärtsrichtung gestreutes Licht erfasst.

Reiber hat in Fresenius Z Anal Chem. (1982) 311: 374 - 375 ein neues physikalisch-chemisches Prinzip zur Bestimmung von Protein-Konzentrationen in biologischen Proben angegeben, bei dem die Proteinfällung in einer Trichloressigsäure (TCA) durchgeführt und anstelle der Lichtabsorption (Trübung) das Streulichtsignal gemessen wird. Die Ausfällung vom Proteinmolekül bedingt dabei anfangs eine Zunahme von streuenden Partikeln mit einer Größe, die klein gegenüber der Wellenlänge 1 des verwendeten Lichtes ist. Dadurch steigt die Streulichtintensität I an, für sie gilt I ∼ 1/lambda⁴. Im Laufe der Ausfällung treten immer größere Partikel auf, die Partikelgrößen sind nun nicht mehr klein gegenüber der Wellenlänge des Meßlichtes, wodurch eine andersartige Lichtstreuung auftritt, für die I - 1/lambda² gilt.

Aufgrund der Wellenlängenabhängigkeit der Streulichtintensität hat man bislang mit mehr oder weniger einfarbigem Licht und zudem nur mit Licht im Bereich des kurzwelligen Endes des sichtbaren Spektrums gearbeitet. Um dabei die benötigte Empfindlichkeit, nämlich eine untere Nachweisgrenze von 20 mg/l, die von den Anwendern erwartet wird, zu erreichen, sind hohe Anforderungen an die Optik und elektronische Auswertung zu stellen. Hierdurch erklärt sich u. a. der relativ hohe Preis bekannter Streulichtphotometer.

Hiervon ausgehend liegt der Erfindung die Aufgabe zugrunde, ein Streulichtphotometer der eingangs genannten Art so weiterzuentwickeln und abzuwandeln, daß der optische Aufbau und die elektronische Auswertung vereinfacht sind.

Gelöst wird diese Aufgabe durch ein Streulichtphotometer mit den Merkmalen des Patentanspruchs 1.

Erfindungsgemäß wird also die in der Küvette befindliche Probe mit Weißlicht bestrahlt. Dies hat den Vorteil, daß der Lichtfluß des eingestrahlten Lichtes deutlich größer ist als bei vorbekannten Geräten. Aufgrund des großen eingestrahlten Lichtflusses ist auch die Streulichtintensität hoch, so daß preisgünstige, langzeitstabile photoelektrisch Empfänger eingesetzt werden können. Das von diesen gelieferte elektrische Signal hat eine Höhe, die die Weiterverarbeitung vereinfacht. Komplizierte Maßnahmen im Bereich der Optik sowie der elektronischen Auswertung entfallen somit.

Es hat sich überraschend gezeigt, daß man von der bisher als notwendig erachteten Verwendung weitgehend einfarbigen Lichtes und von der Verwendung von Licht kurzer Wellenlänge abgehen kann, ohne das Nachweisprinzip zu verlassen. Dies war einerseits im Hinblick auf die grundsätzliche Abhängigkeit der Streulichtintensität von der Wellenlänge, andererseits aber noch durch die speziellen Unterschiede der Wellenlängenabhängigkeit in den beiden vorkommenden Streuungen nicht zu erwarten. Durch Verwendung von weißem Licht nutzt man Wellenlängenbereiche, beispielsweise rotes Licht, in denen die Strahlungsintensität der Lichtquelle deutlich größer ist als am kurzwelligen Ende des sichtbaren Lichtes, weil man sich näher am Maximum der Planck-schen Strahlungskurve befindet. Zugleich ist die Empfindlichkeit preisgünstiger photoelektrischer Empfänger aus Silizium am langwelligen Ende des sichtbaren Spektralbereichs deutlich größer als am kurzwelligen Ende. Durch Verwendung von Weißlicht erhöht man somit die Lichtintensität im eingestrahlten Licht und arbeitet zudem in einem Bereich hoher Quantenausbeute des photoelektrischen Empfängers.

Durch Verwendung von weißem Licht kann der optische Aufbau sehr kurz gehalten werden, hierdurch wird er einfach. Es genügen beispielsweise eine 10 Watt Halogenlampe als Lichtquelle, der ein Kollimator und gegebenenfalls ein rückwärtiger Hohlspiegel sowie eine Sammellinse als optische Bauteile zugeordnet sind. Die gesamte optische Anordnung ist damit weniger als 20 cm lang, wenn eine Linse mit etwa 10 cm Brennweite verwendet wird.

Der photoelektrische Empfänger wird möglichst nah an der Küvette angeordnet, um einen möglichst großen Raumwinkel des Streulichtes zu erfassen. Da aus Silizium hergestellte photoelektrische Empfänger relativ klein sind, kann der Empfänger auch aus räumlichen Gründen nahe der Küvette angeordnet werden und nimmt wenig Platz in Anspruch. Die Größe der gesamten optischen Anordnung wird dadurch im wesentlichen von der Beleuchtungseinheit und der Probenkammer, sowie ihrem Abstand voneinander, bestimmt. Dadurch läßt sich das erfindungsgemäße Streulichtphotometer relativ klein aufbauen, das fertige Gerät hat die Abmessungen 34 x 30 x 14 cm.

In einer bevorzugten Weiterbildung befinden sich zwischen Lichtquelle und Küvette eine Kollimatorlinse, ein Wärmeschutzfilter und eine Abbildungslinse in einem Tubus, der mindestens eine fest vorgegebene Blende aufweist und nicht reflektierend schwarz gefärbt ist. Durch diese Anordnung kann Licht der Lichtquelle nur zur Küvette gelangen, Lichtstrahlen, die seitlich an dieser vorbeitreten und zu einem unerwünschten Signal im photoelektrischen Empfänger führen könnten, werden absorbiert. Der optische Aufbau hat wenige Elemente und ist einfach, wodurch wiederum die Gefahr von unerwünschten Reflexionen vermieden wird.

Das Ausgangssignal des fotoelektrischen Empfängers wird einem A/D-Wandler zugeleitet, wobei für einen Meßwert eine Meßreihe von n aufeinanderfolgenden, kurzfristig hintereinander abgefragten Einzelmessung benutzt wird, deren Werte gespeichert und größenmäßig so geordnet werden, daß nur die n/2 bzw. vorzugsweise nur die n/3 Einzelmessungen mit den kleinsten Meßwerten berücksichtigt und nach Mittelwertbildung als Meßwert ausgegeben werden. Bei der praktischen Durchführung von Streulichtmessungen wird das Streulicht des in der TCA koagulierenden Eiweiß häufig von kurzzeitigen Streulichtintensitäten überlagert, die auf Probenverunreinigungen, Verunreinigungen der TCA sowie evtl. Verdünnungen der TCA zurückzuführen sind. Diese Streulichtsignale addieren sich zur augenblicklichen Einzelmessung. Da die in der Küvette befindliche Lösung jedoch gedreht wird, führen sie nur zu kurzzeitigen Streulichtsignalen. Indem zumindest die Hälfte aller elektrischen Einzelsignale, nämlich zumindest alle höheren Signalwerte für die Mittelwertbildung unberücksichtigt bleiben, wird erreicht, daß derartige fehlerhafte Streulichtsignale das Gesamtergebnis praktisch nicht beeinflussen können.

Als photoelektrischer Empfänger wird vorzugsweise ein Silizium-Photoelement eingesetzt. Dessen Ausgangssignal kann ohne Zwischenspeicherung direkt dem A/D-Wandler zugeleitet werden, weil sich das Signal des photoelektrischen Empfängers während der Zeit der Umwandlung einer Einzelmessung praktisch nicht ändert. In vorteilhafter Weiterbildung ist zwischen dem als Silizium-Photoelement ausgebildeten photoelektrischen Empfänger und dem A/D-Wandler ein Strom/Spannungs-Wandler zwischengeschaltet.

Als sehr vorteilhaft hat es sich erwiesen, bei einem Streulichtphotometer, bei dem sich oberhalb der Küvette ein normalerweise verschlossener Einlaß für eine Pipette, mit der eine zu testende Substanz in die Küvette eingegeben werden kann, befindet, eine Sperrvorrichtung vorzusehen, die den Einlaß sperrt, wenn keine Küvette sich im Probenraum befindet, die den Einlaß aber zu öffnen gestattet, wenn sich eine Küvette im Probenraum befindet. Auf diese Weise wird verhindert, daß irrtümlich in den Probenraum pipettiert werden kann, ohne daß sich in diesem eine Küvette befindet. Ein Pipettieren in den Probenraum würde eine aufwendige Reinigung erforderlich machen und zudem hygienische Gefahren hervorrufen.

Vorteilhafterweise sind alle optischen Bauelemente auf einer starren Tragplatte angeordnet. Dies führt einerseits zu einer präzisen Zuordnung aller optischen Bauelemente, andererseits kann die optische Einheit bei der Herstellung des Gerätes fertig vormontiert und getestet werden, bevor sie in das Gerätegehäuse eingesetzt wird und können Service und Wartung an den optischen Teilen einfach durchgeführt werden, indem die gesamte optische Einheit aus dem Gerätegehäuse entnommen wird.

Schließlich ist es vorteilhaft, die optischen Bauelemente in einer separaten Kammer des Gerätegehäuses unterzubringen. Hierdurch sind einerseits die elektrischen von den optischen Bauelementen getrennt, andererseits ist eine wirksame Kühlung möglich. Da erfindungsgemäß mit einer 10 Watt Halogenlampe gearbeitet werden kann, ist die entstehende Wärme ohnehin geringer als bei vorbekannten Geräten, die zumeist mit leistungsstärkeren Lampen arbeiten. In vorteilhafter Weiterbildung der Erfindung sind zur Kühlung der optischen Bauelemente in Nähe der Halogenlampe Einlaßöffnungen im Gerätegehäuse vorgesehen, entsprechend sind am gegenüberliegenden Ende der optischen Anordnung Auslaßöffnungen vorgesehen. Vor den Auslaßöffnungen befindet sich ein Ventilator, der ständig einen Luftstrom in Längsrichtung der optischen Baueinheit aufrecht erhält, dies führt zu einer wirksamen und für die Praxis völlig ausreichenden Kühlung.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
Fig. 1 ein Blockschaltbild des Streulichtphotometers,
Fig. 2 ein Schnittbild der optischen Anordnung,
Fig. 3 eine Seitenansicht der kompletten optischen Anordnung,
Fig. 4 eine Draufsicht auf die optische Anordnung gem. Fig. 3,
Fig. 5 eine Draufsicht auf einen Küvettenhalter, teilweise schnittbildlich,
Fig. 6 ein Schnitt durch den Küvettenhalter im Sinne der Schnittlinie VI - VI in Fig. 5 und
Fig. 7 eine Darstellung von zwölf Einzelmeßwerten und ihre Verarbeitung.

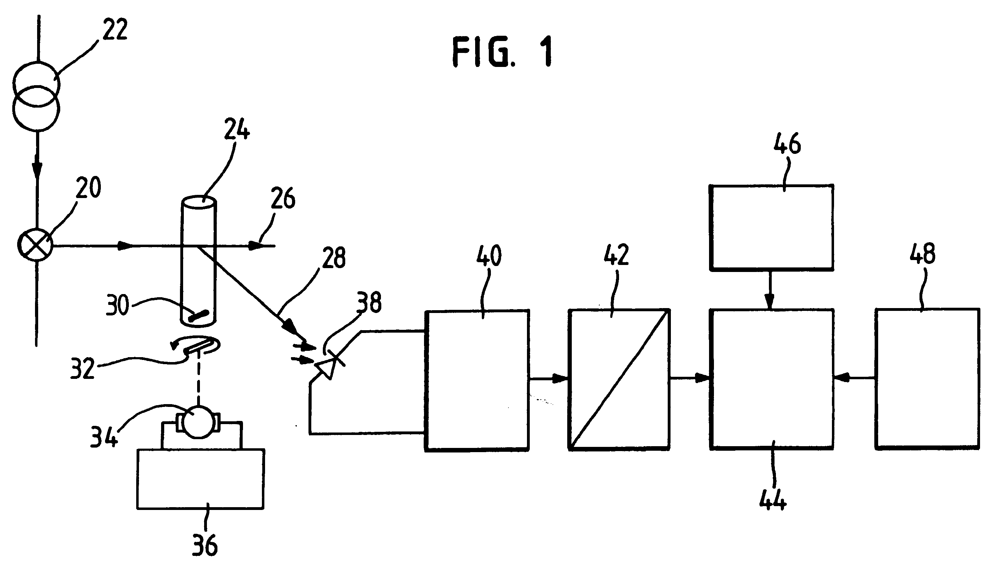

Fig. 1 zeigt die prinzipielle Anordnung der Baueinheiten des erfindungsgemäßen Streulichtphotometers. Eine Lichtquelle 20 in Form einer 6 Volt/10 W Halogenlampe wird von einer Konstantstromquelle 22 mit einem konstanten Strom beaufschlagt. Von ihr ausgehendes Licht wird mittels einer noch zu erläuternden Optik in die Mitte einer Küvette abgebildet, die Küvette hat etwa 7 mm Durchmesser, sie ist zylindrisch. Das Erregerlicht durchläuft die Küvette, wie durch einen Pfeil 26 kenntlich gemacht ist. Die in der Küvette befindlichen Proteine, aber auch Verunreinigungen und dergleichen, führen zu einem Streulicht, das durch den Pfeil 28 dargestellt ist. Es wird in 70 Grad Vorwärtsrichtung beobachtet. In der Küvette befindet sich ein Rührstäbchen 30 aus permanent- oder ferromagnetischem Material, ihm ist ein Magnetstab 32 zugeordnet, der mittels eines Rührmotors 34 gedreht wird, letzterer wird über eine Spannungsquelle 36 mit Spannung versorgt.

Das Streulicht (Pfeil 28) fällt auf einen photoelektrischen Empfänger 38 in Form eines Si-Photoelements BPX 79. Dessen elektrische Anschlüsse sind an einen Strom/Spannungswandler 40 angeschlossen. Sein Ausgang liegt wiederum an einem A/D-Wandler 42. Die nun in digitaler Form vorliegenden Einzelmeßwerte werden in einer Prozessorbaugruppe 44 verarbeitet, hierauf wird noch im einzelnen eingegangen. Aus einer Vielzahl von Einzelmeßwerten kommt ein Meßwert zur Anzeige 46, wo er in Streueinheiten oder in Form einer Proteinkonzentration ausgegeben wird. Die Prozessorbaugruppe 44 kann durch eine Tastatur 48 Steuerbefehle erhalten.

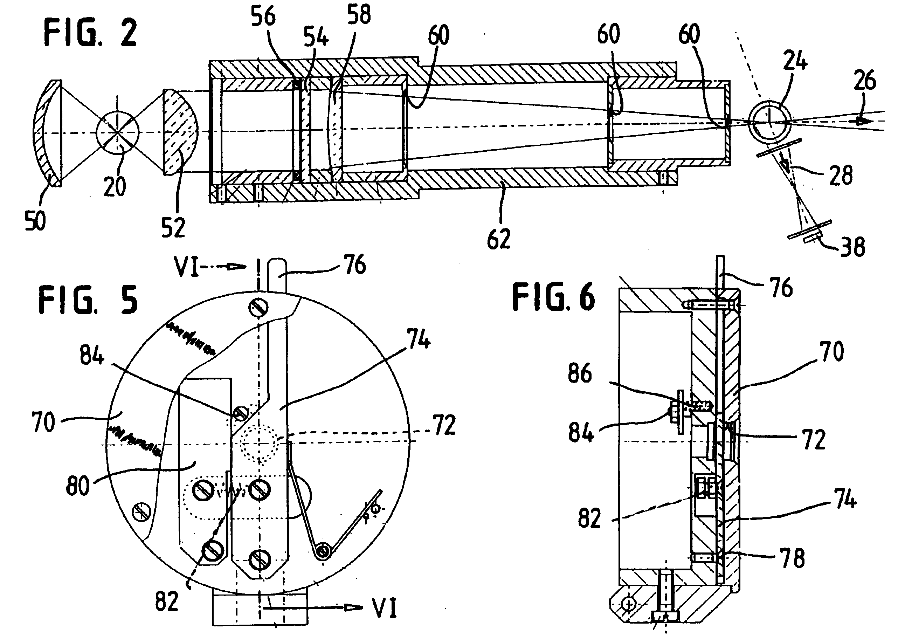

Im folgenden wird auf die optische Anordnung eingegangen. Fig. 2 zeigt die Halogenlampe 20, ihr ist links ein IR-durchlässiger Hohlspiegel 50 im doppelten Brennweitenabstand zugeordnet. Er ist durch Metallbedampfung verspiegelt und reflektiert im sichtbaren Spektralbereich (400 nm bis 800 nm) nahezu verlustfrei und ohne jegliche Selektion, also wellenlängenunabhängig. Nach rechts wird das Licht der Lampe durch eine asphärische Glaslinse 52 (Kollimator), die ebenfalls im Brennweitenabstand angeordnet ist, gebündelt (parallelisiert). Auch die Linse 52 hat eine hohe Transparenz im sichtbaren Spektralbereich und keine selektive Absorption oder Reflexion, läßt also ebenfalls das sichtbare Licht wellenlängenunabhängig hindurchtreten.

Es folgt ein Wärmeabsorptionfilter vom Typ KG 1 der Firma Spindler und Hoyer, das nahezu farblos ist, also im sichtbaren Spektralbereich eine praktisch wellenlängenunabhängige Transmission aufweist. Eine merkliche Absorption setzt erst für Wellenlängen oberhalb 1 µm ein. Das Wärmeschutzfilter 54 ist, wie Fig. 2 zeigt, mechanisch eingespannt, jedoch unter Zwischenlage eines Gummirings 56, so daß es sich thermisch ausdehnen kann.

Es folgt in kurzem Abstand eine Plankonvexlinse aus Glas mit einer Brennweite von etwa 10 cm. Es wird ein Material BK 7 der Firma Spindler und Hoyer benutzt, die Transmission ist im sichtbaren Spektralbereich praktisch konstant.

Im Brennweitenabstand hinter der Plankonvexlinse 58 befindet sich das Zentrum der Küvette 24. Den Lichtkegel zwischen den Teilen 58 und 24 begrenzen drei kreisringförmige Blenden 60, von denen eine möglichst nahe der Küvette 24, eine weitere in Nähe der Plankonvexlinse 58 und eine Dritte zwischen diesen beiden ersten angeordnet ist.

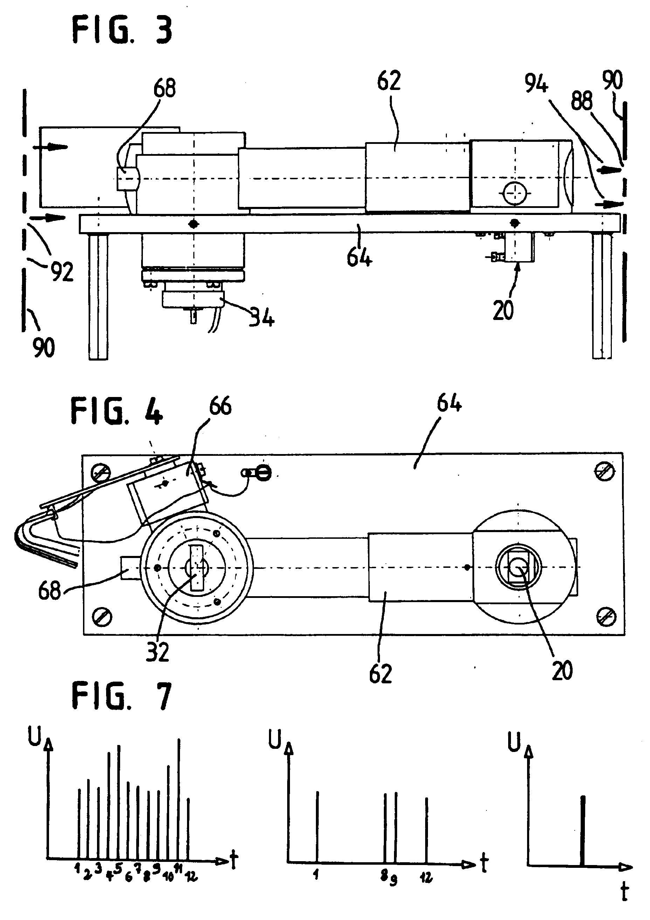

Wie aus Fig. 2 ersichtlich ist, sind die Teile 54 bis 60 in einem lichtdichten Tubus 62 untergebracht. Wie die Figuren 3 und 4 zeigen, sind auch die weiteren Teile der optischen Anordnung weitgehend nach außen hin abgekapselt und dadurch lichtdicht. Die Figuren 3 und 4 zeigen, daß die gesamte optische Anordnung auf einer starren Platte 64 befestigt ist, sie wird über Füße am Boden des (in Fig. 3 angedeuteten) Gerätegehäuses abgestützt und kann mit wenigen Handgriffen montiert bzw. demontiert werden. Aus den Figuren 3 und 4 ist der Probenraum ersichtlich, in dem sich bei der Messung die Küvette befindet. Er ist nach oben hin offen. Der photoelektrische Empfänger 38 ist in einem Ansatz 66 lichtdicht gekapselt in Nähe des Probenraums angebracht, im Ansatz 66 sind auch zwei Blenden (siehe Fig. 2) zwischen Probenraum und Empfänger angebracht. Unter dem Probenraum befindet sich der verschlossen durch den Rührmotor 34, beim Blick in den Probenraum ist das Magnetstab 32 zu erkennen. Weiter ist am Probenraum ein Stutzen 68 vorgesehen, in dem durchgehendes Licht (im Sinne des Pfeiles 26 nach Fig. 1) reflexionsfrei absorbiert wird. Für die Lichtquelle wird eine Prefocus-Fassung benutzt, die einen Austausch der Lichtquelle ohne Nachjustierung gestattet.

Oben ist der Probenraum durch einen Pipettenhalter lichtdicht abgeschlossen, siehe Fig.5 und 6. Unter ihm befindet sich ein Küvettenhalter, der die Küvette aufnimmt, er ist aus den Figuren nicht ersichtlich. Der Pipettenhalter ist nach oben durch eine Ringplatte 70 abgeschlossen, die ein zentrisches Durchgangsloch, im folgenden Einlaß 72 genannt, aufweist. Dieses ist normalerweise durch einen Hebel 74, der eine Handhabe 76 aufweist und ausgehend von der gezeigten Darstellung um die Achse 78 im Uhrzeigersinn verschwenkt werden kann, verschlossen. Links neben ihm befindet sich ein zweiter Hebel 80, der ebenfalls um eine Achse schwenkbar angeordnet ist. Beide Hebel 74, 80 sind über eine Feder 82 elastisch miteinander verbunden. Unterhalb der Ringplatte 70 ist eine Sperre angeordnet, die im wesentlichen aus einer Schraube 84 und Federn 86 besteht. Die Federn drücken eine mit der Schraube 84 verbundene Scheibe nach unten, dadurch bleibt der Kopf der Schraube 84 unterhalb des Bewegungsbereichs der Hebel 74, 80. Wird in diesem Zustand der Hebel 74 durch Betätigen der Handhabe 76 verschwenkt, so folgt ihm der zweite Hebel 80 zwangsläufig nach mit der Folge, daß der Zugang zum Einlaß 72 gesperrt bleibt.

Befindet sich im Probenraum jedoch eine Küvette, so wird die Schraube 84 nach oben gedrückt, ihr Schraubenkopf ragt in den Bewegungsbereich des zweiten Hebels 80 hinein. Wird in diesem Zustand der Hebel 74 verschwenkt, so kann der zweite Hebel 80 nicht folgen, der Einlaß 72 wird frei, durch ihn kann eine Pipette eingeführt werden, mit der eine zu testende Flüssigkeit in die Küvette eingegeben werden kann.

Eine Vielzahl anderer mechanischer oder elektromechanischer Lösungen sind denkbar, um den Zugang zum Einlaß 72 zu versperren, solange sich keine Küvette im Proberaum befindet. So kann beispielsweise der zweite Hebel 80 entfallen, wenn die Schraube 84 auf der anderen Seite des Hebels 74 angeordnet ist und der Hebel 74 eine Ausnehmung (Schlitz) für den Schraubenkopf sowie den Schraubenbolzen hat, die so ausgebildet ist, daß die Schraube bei fehlender Küvette mit ihrem Kopf über der Oberfläche der Ringplatte 70 vorsteht und dadurch die Bewegung des Hebels 74 im Uhrzeigersinn blockiert, sobald die Schraube 84 aber durch eine Küvette weiter nach oben gedrückt wird, befindet sich ihr Kopf vor einem Kanal, in den der Kopf und der Schaft passen, so daß eine Bewegung des Hebels 74 möglich ist. In einer Alternative ist ein Mikroschalter im Probenraum, der die Anwesenheit der Küvette ertastet, vorgesehen. Er steuert ein Relais oder dergleichen, das den Zugang zum Einlaß 72 überwacht.

Fig. 7 zeigt schließlich die erfindungsgemäße Aufbereitung der erhaltenen Einzelmessungen zu einem Meßwert. Im gezeigten Ausführungsbeispiel wird davon ausgegangen, daß kurzzeitig hintereinander vom A/D-Wandler zwölf Einzelmessungen digitalisiert wurden. Bei dem in der praktischen Ausführung eingesetzten Wandler 42 beträgt die Zykluszeit 160 ms. Die insgesamt zwölf Signale (linkes Teilbild von Fig. 7) werden nun größenmäßig bewertet. Es werden nur 1/3 der zwölf Signale, also eine Gruppe von vier Signalen (mittleres Teilbild von Fig. 7) weiterverarbeitet, sie sind dadurch ausgewählt, daß sie die vier kleinsten Werte aufweisen. Anders ausgedrückt werden nur die vier kleinsten Meßwerte weiterverarbeitet, die acht Meßwerte mit darüberliegenden Werten bleiben unbeachtet. Nach Mittelwertbildung aus den vier Einzelmeßwerten wird ein Meßwert erhalten, der im rechten Teilbild der Fig. 7 dargestellt ist. Dieser wird angezeigt bzw. gespeichert und mit nachfolgenden, auf gleiche Weise erhaltenen Meßwerten verglichen.

In Fig. 3 sind schließlich Auslaßschlitze 88 in einem Gerätegehäuse 90 in Nähe der Lichtquelle 20 sowie Einlaßschlitze 92 am anderen Ende der optischen Anordnung. Ein Ventilator ist aus Vereinfachungsgründen nicht gezeigt. Durch Pfeile 94 wird die Luftströmung symbolisiert.

## Patentansprüche

1. Streulichtphotometer, insbesondere zur kinetischen Gesamteiweißbestimmung, mit
(a) einer Weißlicht-Lichtquelle (20),
(b) einer zwischen einem Probenraum und dieser Lichtquelle (20) angeordneten Optik,
(c) einer im Probenraum befindlichen, austauschbaren Küvette (24), in die eine zu untersuchende Flüssigkeit eingegeben werden kann,
(d) einem photoelektrischen Empfänger (38), der schräg in Vorwärtsrichtung gestreutes Licht empfängt,
(e) einer diesem photoelektrischen Empfänger (38) nachgeschalteten Auswerteelektronik und einer Anzeigeeinheit (46) für gemessene Streulichtwerte,
(f) Anordnung nur optischer Bauteile zwischen Lichtquelle (20) und Küvette (24) sowie zwischen Küvette (24) und dem photoelektrischen Empfänger (38), die im sichtbaren Spektralbereich 400 nm bis 800 nm eine möglichst grobe Durchlässigkeit bzw. Reflexion ohne selektive Absorption bzw. Reflexion aufweisen,
(g) einer Rührvorrichtung, mit der die zu untersuchende Flüssigkeit während der Untersuchung bewegt wird,
(h) einer die Lichtquelle in den Probenraum abbildenden Optik,
(i) einer Weiterleitung des Ausgangssignal des photoelektrischen Empfängers (38) an einen A/D- Wandler (42),
(j) Umwandlung, Speicherung und größenmäßiger Bewertung einer Meßreihe von n aufeinanderfolgenden Einzelmessungen für einen Meßwert in digitale Signale, so daß für eine anschließende Mittelwertbildung und Ausgabe des einzelnen Meßwertes höchstens nur die Hälfte derjenigen Einzelmeßwerte benutzt wird, die die kleinsten Werte haben.

2. Streulichtphotometer nach Anspruch 1, dadurch gekennzeichnet, daß sich zwischen Lichtquelle (20) und Küvette (24) eine Kollimatorlinse (52), ein Wärmeabsorptionsfilter (54) und eine Abbildungslinse (58) befinden.

3. Streulichtphotometer nach Anspruch 1, dadurch gekennzeichnet, daß für die Mittelwertbildung und Ausgabe des einzelnen Meßwertes nur ein Drittel derjenigen Einzelmeßwerte benutzt wird, die die kleinsten Werte haben.

4. Streulichtphotometer nach Anspruch 1, bei dem sich oberhalb der Küvette (24) ein normalerweise verschlossener Einlaß (72) für eine Pipette befindet, um eine zu testende Substanz in die Küvette (24) pipettieren zu können, dadurch gekennzeichnet, daß eine Sperrvorrichtung (74 - 86) vorgesehen ist, die den Einlaß (72) verschließt, wenn keine Küvette (24) sich im Probenraum befindet und den Einlaß (72) zu öffnen gestattet, wenn sich eine Küvette (24) im Probenraum befindet.

5. Streulichtphotometer nach Anspruch 1, dadurch gekennzeichnet, daß alle optischen Bauelemente auf einer starren Tragplatte (64) angeordnet sind.

6. Streulichtphotometer nach Anspruch 1, dadurch gekennzeichnet, daß die optischen Bauelemente in einer separaten Kammer des Gerätegehäuses angeordnet sind und daß in Nähe der Lichtquelle (20) Einlaßöffnungen für Luft und in Nähe der Probenkammer ein Ventilator und Auslaßöffnungen vorgesehen sind.

7. Streulichtphotometer nach Anspruch 1, dadurch gekennzeichnet, daß der photoelektrische Empfänger (38) mit einem A/D-Wandler (42), vorzugsweise unter Zwischenschalten eines Strom/Spannungs-Wandlers (40), verbunden ist.

## Claims

1. Dispersion photometer, in particular for the kinetic determination of total proteins, comprising
(a) a source of white light (20),
(b) an optical system which is arranged between a sample chamber and the said light source (20),
(c) a removable optical cell (24) in the sample chamber, into which the liquid to be analyzed can be given,
(d) a photo-electric sensor (38) which receives light scattered in an forward angle,
(e) an electronic processing and display unit (46) following this photoelectric sensor for processing and displaying the scattered light values,
(f) arrangement of only such optical components between the light source (20) and the optical cell (24) and between the optical cell (24) and the photo-electric sensor (38), which in the visible spectral range 400 to 800 nm exhibit a maximum transmission, respectively a reflection without selective absorption or reflection,
(g) a stirrer stirring the liquid to be analyzed during the measurement,
(h) an optical system focusing the image of the light source into the sample chamber,
(i) coupling the output signal of the photo-electric sensor (38) to an A/D converter (42),
(j) for obtaining one measured value digitizing, storing and evaluating according to their magnitude the data of n individual measurements and averaging such that for the consecutive averaging and outputting of said one measured value at the most only half of those individual measurements are used, which have the smallest values.

2. Dispersion photometer according to claim 1, characterized in that a collimator lens (52), a heat absorption filter (54) and an imaging lens (58) are arranged between the light source (20) and the optical cell (24).

3. Dispersion photometer according to claim 1, characterized in that for said averaging and outputting of said one measured value only one third of those data of individual measurements are used, which have the smallest values.

4. Dispersion photometer according to claim 1, having above the optical cell (24) a normally locked opening (72) for a pipette, by which a substance to be tested can be injected in the optical cell (24), characterized in that a locking system (74-86) is provided, which locks the opening (72) if there is no optical cell in the sample chamber and which allows to open the opening (72) if there is an optical cell in the sample chamber.

5. Dispersion photometer according to claim 1, characterized in that all optical components are attached to a rigid base plate (64).

6. Dispersion photometer according to claim 1, characterized in that the optical components are in a separate chamber of the instrument housing, that there are exit openings for air close to the light source that there is a fan close to the lamp, and that entrance openings for air are provided.

7. Dispersion photometer according to claim 1, characterized in that the photo-electric sensor (38) is connected to an A/D-converter (42), whereby preferably a current/voltage converter (40) is arranged in between.

## Revendications

1. Photomètre à écran diffusant, en particulier pour la détermination cinétique de protéines totales avec
(a) une source lumineuse (20) de lumière blanche,
(b) une optique placée entre un compartiment échantillon et cette source lumineuse (20),
(c) une cuvette (24) remplaçable, se trouvant dans le compartiment échantillon, dans laquelle un liquide à analyser peut être introduit,
(d) un récepteur photoélectrique (38) recevant obliquement en sens direct la lumière diffusée,
(e) un système électronique d'évaluation placé en aval de ce récepteur photoélectrique (38) et une unité d'affichage (46) destinée aux valeurs mesurées de la lumière diffusée,
(f) arrangement entre la source lumineuse (20) et la cuvette (24) ainsi qu'entre la cuvette (24) et le récepteur photoélectrique (38) que des composantes optiques présentant dans le domaine spectral visible 400 nm à 800 nm une transparence voire une réflexion la plus grande possible sans absorption voire réflexion sélective,
(g) un dispositif d'agitation par lequel le liquide à analyser est agité pendant l'examen,
(h) un optique qui reproduit la source lumineuse dans le compartiment échantillon,
(i) amener le signal de sortie du récepteur photoélectrique (38) à un convertisseur analogique/numérique (42),
(j) convertir en signaux numériques, mémoriser et analyser au point de vue dimension qu'une série de mesures de n mesures individuelles succesives pour obtenir une valeur mesurée en utilisant que seule la moitié des valeurs individuelles mesurées ayant les valeurs les plus petites pour le calcul ultérieur et l'édition de la valeur moyenne individuelle.

2. Photomètre à écran diffusant selon la revendication 1 caractérisé en ce qu'entre la source lumineuse (20) et la cuvette (24) se trouvent une lentille de collimateur (52), un filtre d'absorption de chaleur (54) et une lentille de reproduction (58).

3. Photomètre à écran diffusant selon la revendication 1 caractérisé en ce que seul un tiers des valeurs individuelles mesurées ayant les valeurs les plus petites soient utilisée pour le calcul ultérieur et l'édition de la valeur moyenne individuelle.

4. Photomètre à écran diffusant selon la revendication 1 où au-dessus de la cuvette (24) se trouve un orifice d'entrée normalement fermé pour une pipette afin de pouvoir pipetter dans la cuvette (24) une substance à tester, caractérisé en ce qu'est prévu un dispositif de blocage (74 - 86) obturant l'orifice d'entrée (72) si aucune cuvette (24) ne se trouve dans la pièce d'essai et permettant d'ouvrir l'orifice (72) si une cuvette (24) se trouve dans le compartiment échantillon.

5. Photomètre à écran diffusant selon la revendication 1 caractérisé en ce que tous les éléments optiques sont disposés sur une plaque portante (64) rigide.

6. Photomètre à écran diffusant selon la revendication 1 caractérisé en ce que les éléments optiques sont disposés dans une chambre séparée du boîtier de l'appareil et en ce qu'à proximité de la source lumineuse (20) sont prévues des orifices de sortie pour l'air et à proximité de la lampe un ventilateur et des orifices d'entrée.

7. Photomètre à écran diffusant selon la revendication 1 caractérisé en ce que le récepteur photoélectrique (38) est relié à un convertisseur analogique/numérique (42), de préférence en intercalant un transformateur courant-tension (40).
